# EUROPEAN PATENT SPECIFICATION

(11) **EP 0 941 028 B1**
(45) Date of publication and mention of the grant of the patent: **30.07.2003**
(21) Application number: 97913295.8
(22) Date of filing: 24.11.1997
(51) Int. Cl.: A01N 25/18

(54) **MOSQUITO-REPELLENT BAND**
MÜCKENABWEISENDER STREIFEN
BANDE REPULSIVE CONTRE LES MOUSTIQUES

(30) Priority: 26.11.1996 GB 9624512
(43) Date of publication of application: 15.09.1999
(73) Proprietor: Baker, Stephen, Warwick CV34 4HB (GB); Flounders, Terry, Hatfield, Herts AL9 6HU (GB); O'Shea, Andrew, Warwick CV34 4HB (GB)
(72) Inventor: Baker, Stephen, Warwick CV34 4HB (GB); Flounders, Terry, Hatfield, Herts AL9 6HU (GB); O'Shea, Andrew, Warwick CV34 4HB (GB)
(74) Representative: Tillbrook, Christopher John
(86) International application number: GB9703137
(87) International publication number: WO98023149

(56) References cited:
- EP-A- 0 328 937
- WO-A-94/10842
- WO-A-95/17091
- CHEMICAL ABSTRACTS, vol. 115, no. 24, 1991 Columbus, Ohio, US; abstract no. 258250c, UMIBE ET AL.: "Fabrics with durable insect repellence" XP002056738 & JP 03 090 682 A
- CHEMICAL ABSTRACTS, vol. 114, no. 7, 1991 Columbus, Ohio, US; abstract no. 57563n, EZAKI ET AL.: "Insecticide composition for spraying on fibers or fabrics for manufacturing insect-repelling clothing or bedding " XP002056739 & JP 02 200 602 A
- CHEMICAL ABSTRACTS, vol. 123, no. 17, 1995 Columbus, Ohio, US; abstract no. 220857h, NAGATA K.: "Annelid-repellent aqueous compositions containing diethyltoluamide" XP002056740 & JP 07 173 005 A
- DATABASE WPI Derwent Publications Ltd., London, GB; AN 91-048801 XP002056741 HOSOKAWA KIGYO KK: "Insect repellent cloth for clothes, carpets, etc.- has microcapsules contg. di:ethyl-toluamide attached to fabric with resin " & JP 03 002 101 A
- DATABASE WPI Derwent Publications Ltd., London, GB; AN 95-070809 XP002056742 DAIWA KAGAKU KOGYO KK: "Processing synthesised fibre with blood-sucking insect repellent, providing insect repellent clothing with good wash resistance-comprises treating hollow fibre with repellent e.g. in emulsion form and opt. with e.g. epoxy resin " & JP 06 346 373 A
- DATABASE WPI Derwent Publications Ltd., London, GB; AN 92-178063 XP002056743 ASAHI CHEM IND CO LTD: "Insect controlling textile fabric- composed of knitted or woven base fabric whose surfaces contg. encapsulated insect controlling chemical fixed with binder" & JP 04 100 980 A

## Description

The present invention relates to the release of vapour for constructive purpose or effect and is particularly, but not exclusively, concerned with the controlled release of insect repellent.

The term controlled is used herein to embrace some measure of predetermined regulation, such as one which admits of ongoing selective variation - say, temporarily to increase a rate of release.

The term repellent is used herein to embrace a deterrent, rather than any necessarily harmful, fatal, or insecticidal effect.

The term insect is employed herein to embrace a wide variety of creatures - of which mosquitos are a particular case, prevalent in hot climates and a pest to humans.

Mosquito bites are not only a source of irritation and discomfort, but are potentially dangerous, with mosquitos possibly carrying (infectious) diseases, such as malaria or yellow fever.

It is generally known to use chemical repellents - applied to clothing or direct to the skin - to discourage (female) mosquitos from biting.

One of the most widely used repellents over the past 40 years has been a formulation: N,N-diethyl-m-toluamide (commonly known as 'DEET).

DEET repels mosquitos in two ways:
· Initially, DEET blocks the female mosquito's antennal sensory receptors for volatile and organic molecules - undermining the insect's ability to detect potential prey from a distance;
· DEET then makes the 'prey' distasteful to the insect, as it moves into close proximity.

This may be achieved, either by providing a volatile repellent 'aura', or by making the subject skin surface unpleasant to the tarsal chemoreceptors on the insect's legs.

DEET has proved one of the most effective single compounds available.

Nevertheless it has been proposed to use DEET in combination with other ingredients, in particular citronella, for complementary effect.

Thus AU-A-6018590 (D10) discloses synergistic combinations of DEET and citronella or geraniol oil. Similarly, DE-A-2618975 (D12) discloses insect repellent compositions containing DEET and citronella in equal proportions. WO-A-9108670 (D11) on pesticidal repellent formulations of azadirachtin, DEET and citronella component combination - but only for direct application to the skin.

However, none of this art addresses an appropriate controlled delivery mechanism.

Generally, chemical insect repellents are deployed by a gaseous phase transformation of an active ingredient, such as evaporation from a liquid form.

There is thus a need to control the rate of evaporation to regulate the dosage concentration.

If the rate is too rapid, the effect is rapidly exhausted. On the other hand, if the rate is too slow, the source of repellent is 'disguised' - and so the repellent is less effective.

The rate of repellent evaporation requires careful control, for maximum and prolonged protection.

One convenient way of delivering insect repellent currently available is through bands, for personal wear around wrists, ankles and necks.

These bands are typically simply soaked, by immersion, in liquid DEET - which evaporates progressively.

The bands are stored in a sealed bag following production, and the DEET begins to evaporate as soon as the storage bag is opened.

This crude 'soaked band' system has several disadvantages.

Firstly, the evaporation of the DEET is uncontrolled.

Even when the bands are still in their sealed bags, there will be a degree of evaporation - giving the bands a limited shelf-life.

Once a band has been exposed to the air, by opening the bag, the release of DEET will be uncontrolled and relatively short-lived, before exhaustion of the source material.

Moreover, the *rate* of evaporation may be effected by prevailing conditions; ambient heat in particular causing the repellent to evaporate more rapidly.

This active ingredient may also require dissolution in a (volatile) carrier, such as ethanol, to assist evaporation of the carrier and active ingredient.

The consequent dilution makes the repellent action less effective.

Furthermore, there are some concerns on the safety of DEET when used in high concentrations.

Originally, DEET was used in an undiluted form, applied directly to the skin.

However, it was soon recognised that such high dosages were potentially hazardous, and so undesirable - particularly for the young and elderly.

Currently, various diluted products are available, but these too have disadvantages.

Many such products are applied topically to the skin.

Not only is the efficacy of these products reduced by dilution, but the DEET is absorbed into the skin.

To counter this and the 'uncontrolled' evaporation, repeat applications are required, with further unwanted transdermal absorption of DEET.

Alternative chemicals are either not as effective as DEET, or have their own drawbacks.

Generally, micro-encapsulation is known for 'packaging' a substance in multiple, discrete, 'minute' quantities, for controlled release by capsule rupture.

Effectively, minute portions of an 'active ingredient' substance are individually sealed within tiny capsules of a fragile shell agent, ready for delivery and release.

The encapsulated substance is not released until the capsules are ruptured and burst - by physical disturbance, for example by contact friction.

The minute capsules (of the order of some one tenth of the size of a dust-mite) are present in very large numbers (in the order of millions).

Any application of a force to the capsules will thus be likely to cause only some of them to burst - allowing a gradual and controllable release.

Fabric impregnation with micro-encapsulated substances is known.

For example, garment fabrics have been scented with micro-encapsulated fragrance, as an anti-perspirant, and socks with micro-encapsulated medicated foot powder.

It is also known to microencapsulate insecticides.

Thus, JP-A-0390682 (D3) discloses fabrics finished with binders containing microencapsulated DEET. JP-A-07173005 (D5) discloses microencapsulated DEET for application to clothes and shoes, to provide insect repellency. JP-A-03002101 (D6) discloses an insect repellent cloth (textile, knit, or woven etc.) which contains microencapsulated DEET and JP-A-06346373 (D7) discloses processing synthetic fibre with a microencapsulated insect repellent, such as, DEET.

Micro-encapsulation also has the advantage that the (core) substance is 'packaged' and so protected from the environment.

Thus, by encapsulation, inherently volatile substances will not evaporate, and attendant degradation may be delayed or slowed.

WO-A-9517091 (D2) discloses slow, controlled release microencapsulated DEET which is applied to woven, non-woven and knitted substrates.

The insect repellent may be released by rupture of the microcapsule. WO-A-9410842 (D1) discloses insect repellent articles in which a microencapsulated insect repellent is contained In a substrate, for example, paper or non-woven fabric. DEET and citronella or other essential oils may be used but no mention is made of the particular combination of DEET and citronella in the microcapsules.

Again none of this art provides a controlled delivery for apparel.

According to the present invention,
insect repellent apparel,
comprising a fabric substrate,
embodying a micro-encapsulated formulation,
of insect repellent,
comprising N, N-diethyl-m-toluamide (DEET),
in combination with Citronella,
providing an olfactory indication
   of repellent release,
by micro-capsule rupture,
upon fabric disturbance,
through wear and wearer contact.

The substrate could be coherent inter-nesting filamentary form (eg woven or knitted) or a random laid fibre mesh pulp, such as paper or card.

A woven fabric provides a regular array of inter-filamentary pores in the weave, available for the entrainment of micro-capsules.

Moreover, a woven construction facilitates fabric stretch and recovery - ie a substrate disturbance for rupture of micro-capsules, and attendant release of their contents.

Desirably, the fabric is elasticated - embodying, say, an elasticated yarn and complementary weave pattern - to restore its shape after stretching.

Alternatively, non-woven, but flexible or resiliently deformable, substrates - such as pressed fibre matting, or porous sponges - could be employed to carry micro-capsules, ruptured by fabric flexing.

The (fabric) apparel may be configured as a band for wear at the outer - typically unclothed or uncovered - extremities of limbs, such as the wrists, ankles, neck and forehead.

For loose clothing, or bare mid-riff, a waistband could also be contemplated.

A necklace, neck tie or forehead band affords localised head and face protection - subject to adverse direct inhalation considerations.

Generally, a disparate variety of outer and under clothing and garment accessories, such as bracelets, belts, braces, straps and ties, are feasible.

Wearer contact friction, created by natural body movement when simply wearing the bands, is generally sufficient continually to rupture small numbers of capsules and so progressively release their contents.

Body warmth can also help condition the micro-encapsulated active ingredient for ready evaporation upon release.

Release can be promoted by simply rubbing or stretching and 'snap-releasing' the fabric one or more times against the skin, to rupture more capsules, with attendant increase in release of active ingredient.

Elasticated fabric allows greater distortion, and therefore makes it easier to increase the release.

The elasticated bands are also more comfortable to wear, and easier to fit and remove.

Material with a relatively great surface area per unit length, such as woven elasticated material, also has a greater capacity for capsules.

However, impregnated paper (eg pressed pulp fibre) bands offer a low-cost alternative.

For denser or non-porous materials, substrate impregnation may be supplemented, or even replaced, by surface coating deposition.

Impregnated or coated bands could offer low-cost, effective protection against mosquitos, particularly valuable in the third world where the insects spread disease.

Multi-layer, or laminated, 're-inforced' paper, comprising a plastic layer sandwiched between two paper layers, might be used for increased inherent strength and durability.

Generally, the use of micro-encapsulated DEET and Citronella combination formulation drastically reduces its direct exposure to the skin.

Effectively, portions of the (DEET) repellent are individually sealed within tiny capsules of a fragile shell agent.

The contents are only released upon rupture of the capsule.

This protective shell allows safe, close skin contact.

The gradual rupture of the micro-capsules caused by natural body movement when simply wearing the bands will generally be sufficient continually to rupture small numbers of capsules, progressively releasing only small quantities of DEET.

When the micro-capsules are broken, the DEET is released into the atmosphere. Microscopic quantities may reach the skin as vapour - but this would not be absorbed.

Rupture of capsules and therefore release of the active ingredient may be increased by simply rubbing or distorting the band fabric.

Small quantities of repellent may thus be picked up on the finger tips - but compared to topical use, the exposure is negligible.

In fact, according to The Medical Entomology Centre Cambridge, exposure to DEET through wearing (micro-)encapsulated bands according to the present invention may be less than that caused through physical contact with someone who has applied a repellent product containing DEET directly to their skin.

Furthermore, it was deemed likely that the use of such bands would be safer than using one of the so-called 'natural' repellent formulations, because these contain various terpene type chemicals, which may cause skin irritation.

(Micro-)encapsulation serves as a suppressant or inhibitive barrier to such irritant contact.

Whilst DEET is a preferred encapsulated insect repellent, other preparations could be used.

For micro-encapsulation, DEET can be used in very high concentrations in DEET, as there is no need to add a dilutant 'carrier' medium to assist evaporation.

Nevertheless, the invention may be used for active ingredients in a carrier medium, although this is not a claimed feature of the present invention which uses DEET in conjunction with the natural Insect repellent known as Citronella.

Citronella is not only a co-repellent, but also has a pleasant characteristic fragrance.

This fragrance acts as a repellent indicator.

Thus the absence of the fragrance will indicate that more repellent should be released.

Release may be promoted by rubbing or physically distending and (snap-)releasing the band.

If no fragrance is generated, there are insufficient capsules bursting and releasing the repellent.

This indicates that the band is becoming low, or exhausted of repellent and needs replacement or re-charging.

A ratio of 90% DEET and 10% Citronella determined by volume has been found to be effective in providing good mosquito repellent effect, and a noticeable indicator fragrance.

Other combinations of complementary active ingredients are also envisaged.

Thus, aromatherapy oils could be combined with the insect repellent, for supplementary fragrant sensation and therapeutic effect to the wearer.

Although not a claimed feature of the present invention, for the production of wrist band material, (woven) elasticated fabric may be lead from a storage reel through a slurry prepared from micro-capsules containing DEET and Citronella, in desired proportions.

The slurry may be held in a trough which may be used in other fabric treatment processes, such as bleaching.

As the fabric passes through this trough, it is slightly stretched, to increase the fabric surface area, and so the number of micro-capsules attached or entrained.

Once it has been passed through the trough and has picked up the micro-capsules, the fabric is wrapped around a heated drum.

This drum is held at a temperature which will help the fabric to dry, but which will not adversely affect the micro-capsules or their contents.

Since the DEET and Citronella are encapsulated and therefore will not evaporate, it is not essential to protect the fabric from the air.

The fabric can then be cut to size, stitched into bands and packaged, as necessary.

For denser, low porosity or non-woven fabric - including paper and card - impregnation may be supplemented with or replaced by surface bonding, with a proprietary adhesive, such as 'gum arabic'.

The viscosity of the micro-encapsulated solution is adapted accordingly, and the solution is effectively printed onto the fabric.

Various processes are known for the production of the micro-capsules; for example as taught in US Patents Nos: 3,516,846; 3,516,941; and British Patents Nos: 1,156,725; 2,041,319; and 2,048,206.

Processes for the production of a slurry of micro-capsules are taught, for example, in European Patent Application No: 85309014.0.

Although not a claimed feature of the present invention, re-charging of spent or exhausted repellent bands is envisaged.

One recharge or replenishment method albeit not the subject of the claims would be to dip the band into a container of micro-encapsulated slurry.

A bespoke container lid or cap could be configured to draw off excess solution upon removal of the band from the container.

Alternatively, a solution of micro-encapsulated ingredient could be sprayed onto fabric.

A proprietary - say pump action - container mounted spray nozzle mechanism could be employed.

It has been found that the micro-capsules are surprisingly 'malleable' in liquid solution, upon passage through the spray head and upon contact with the fabric.

Thus, despite the (frictional) forces applied to the capsules during the spraying action, encapsulation is largely preserved and the majority of the capsules are delivered intact.

Re-charging is most efficient when applied to an 'absorbent' product fibre - such as cotton.

To increase the uptake of the micro-capsules upon recharge spraying, it is desirable to increase the surface area of the fabric.

Although this is not a claimed feature of the present invention, this may be achieved by stretching the fabric.

A dedicated recharge spray head mount could be used, wherein the band or fabric to be recharged is stretched over a mounting head - and the sprayed with the solution.

The recharged band is allowed to dry and can then simply be removed from the mount.

The impregnated bands according to the invention (with the obvious exception of the paper variants) are washable, at least for several machine washes, without loss of efficacy.

Bands may also be worn while swimming.

The bands could carry branding insignia and promotional messages, either printed, dyed or woven into the body of fabric.

There now follows, by way of example only, a description of controlled experimental trials of encapsulated wrist bands, impregnated with micro-encapsulated DEET and Citronella insect repellent formulation, according to the invention.

Tests of insect repellent activity were conducted for the Applicants by the Medical Entomology Centre at the University of Cambridge.

### Test Study 1

The first test study was conducted in July 1996, and was designed to evaluate the possible efficacy of micro-encapsulated DEET applied to elasticated wrist bands.

Impregnated, elasticated wrist bands were used as supplied by the Applicants.

Each band had been pre-treated with micro-encapsulated DEET and Citronella in a ratio of 9:1.

Four volunteers, three males and one female, were used to test the effect of the bands on the biting activity of the Yellow Fever species of mosquito known as Aedes Aegypti, using insects that had emerged as adults not less that four days previously.

This species is found in mosquito infestations worldwide and so action against it is of widespread benefit.

These mosquitos came from the culture colony maintained by the Medical Entomology Centre, and batches of fifty insects with approximately equal numbers of males and females were employed in each test.

The test was conducted in a specially constructed chamber, illuminated by natural light and with white melamine walls for easy identification of the insects.

The volunteers were dressed in protective clothing, seated and with only their forearms, wrists and hands exposed.

If a female mosquito landed on the exposed skin, it was allowed to probe and commence feeding, in order to confirm a potential bite, before being interrupted by shaking the volunteer's arm to avoid an actual bite.

The volunteers were sealed in the chamber one at a time.

Each was given a sealed bag containing impregnated bands.

The volunteers then performed the two phases of the test alone.

The first phase of the test was the control.

The volunteer used no insect repellent and the time was measured for the volunteer to experience ten 'potential' bites, or the number of 'potential' bites experienced in ten minutes was counted.

In the second phase of the experiment, each volunteer placed one impregnated wrist band around each wrist, and extended the bands twice in order to rupture some of the micro-capsules.

The volunteers then counted the number of 'potential' bites by female mosquitos in a twenty minute period.

At the end of the test the air was flushed from the test chamber, using an extractor fan, and the next volunteer was sealed in the chamber.

The results obtained from this study are summarised in Table 1.

Overall, the results show a significant decrease in bite rate for all of the volunteers, even taking account of individual skin/hair characteristics and propensities for bites.

**Table 1**

| Subject | Control (no bands) | | | Test (with bands) | | % Reduction |
|---|---|---|---|---|---|---|
| | No of bites | Time (mins) | Bites per minute | Bites per 20 mins | Bites per minute | |
| A | 10 | 3.4 | 2.97 | 8 | 0.4 | 86.5 |
| B | 10 | 1.3 | 7.69 | 6 | 0.3 | 96.1 |
| C | 6 | 10 | 0.60 | 2 | 0.16 | 83.3 |
| D | 10 | 2.9 | 3.41 | 4 | 0.2 | 94.1 |

It was the opinion of the scientists conducting the tests that such reductions in bite rate would normally only be achieved by use of topically applied repellents.

In conclusion, the impregnated wrist bands achieved a higher level of reduction of the biting rate of female Aedes Aegypti mosquitos on human volunteers than was expected from previous experience with other such products.

The scientists also found that the micro-encapsulated repellent formulation, in the proportions of 90% DEET and 10% Citronella, provided the wearer with a simple (scent) indicator that repellent is available - and so could be used as a warning:
· either that more material needed to be released - such as by stretching the bands and thus rupturing more micro-capsules; or
· that the bands were effectively exhausted and needed replacement with fresh bands.

### Test Study 2

The second study was run by the Medical Entomology Centre at the University of Cambridge in September 1996, as a follow-up to Test Study 1 as above, and to assess longevity of action and dosage.

The tests were designed to determine the effect of simulated wear on the activity of the product and to measure the loss of activity after a period of use.

To this end, the biting activity of the female insects when the volunteers were not wearing the

Applicants' bands was compared to that prevailing when the volunteers had 'fresh' impregnated bands, and when the volunteers wore 'used' bands.

The 'fresh' bands were newly manufactured and had not been used in any way prior to the test.

The 'used' bands had been subjected to a simulated use process, in which the bands had been worn for 100 hours, calculated to be approximately equivalent to 7 days wear.

The test was carried out 'blind', in that the bands were not identified as being fresh or used.

Rather, the suppliers allocated the bands two different serial numbers.

Three volunteers, two males and one female, were used to test the effect of the 'fresh' and 'used' bands on the biting activity of the Yellow Fever mosquito Aedes Aegypti. using insects that had emerged as adults not less that four days previously.

Once again, these mosquitos came from the culture colony maintained by the Medical Entomology Centre, and batches of fifty insects with approximately equal numbers of males and females were employed in each test.

The test was conducted in the same specially constructed chamber as was used in the earlier study, which was again illuminated by natural light and with white melamine walls for easy identification of the insects.

The volunteers were dressed in protective clothing, seated, and with only their forearms, wrists and hands exposed, and the same method for determining a 'potential' bite by a female mosquito was used as in the previous tests.

The volunteers were sealed in the chamber one at a time. Each was given two sealed bags, one containing 'fresh' bands and one containing 'used' bands.

The volunteers then performed the three phases of the test alone.

The first phase of the test was the control.

The volunteers used no insect repellent and the time was measured for ten potential bites to be experienced.

In the second phase of the experiment, each volunteer removed impregnated wrist bands from one of the sealed bags provided and placed one band around each wrist, extending the bands four times in order to rupture some of the micro-capsules.

The time was then measured for the volunteer to experience thirty potential bites from female mosquitos.

At the end of this phase, the volunteers replaced the tested bands in the sealed bag, and the air was flushed from the test chamber using an extractor fan.

For the third and final phase, the volunteer removed the wrist bands from the remaining sealed bag and placed one around each wrist, extending and releasing them four times to rupture some of the micro-capsules.

Again the time was measured for the volunteer to experience thirty potential bites.

At the end of this phase, the air in the chamber was once again cleaned to remove traces of the repellents which would distort the results of the test.

The results are summarised in Table 2.

**Table 2**

| Subject | Exposure level | Bites | Time (minutes) | Bites per minute | % Reduction |
|---|---|---|---|---|---|
| A | Control | 10 | 0.35 | 16.8 | - |
| | Series 29596 | 30 | 2.51 | 10.5 | 37.5 |
| | Series 10996 | 30 | 4.40 | 6.4 | 62.0 |
| B | Control | 10 | 0.46 | 13.0 | - |
| | Series 29596 | 30 | 4.16 | 7.0 | 46.1 |
| | Series 10996 | 30 | 5.46 | 5.2 | 60.0 |
| C | Control | 10 | 0.24 | 25.0 | - |
| | Series 29596 | 30 | 4.27 | 6.7 | 73.2 |
| | Series 10996 | 30 | 6.26 | 4.7 | 81.2 |

The bite rates in the initial (control) phase were higher than in the previous study, and this was put down to the insects being more hungry at the time of the tests.

All volunteers experienced a significant decrease in the biting rate when wearing the wrist bands.

A difference in the biting rate was found between the two bands, ie the 'fresh' and the 'used' bands, in all tests.

In each case, the level of biting experienced whilst wearing the Series 29596 band was greater than that experienced wearing the Series 10996 band.

From this result it was concluded that the Series 29596 was the 'used' band which had been subjected to the simulated wear treatment.

Overall, it was concluded that, as expected, there was some loss of efficacy with use of the bands, because of the resultant reduction in the number of micro-capsules on the impregnated bands.

This was accompanied by a reduction in the rate of inhibition of biting by female Aedes Aegypti mosquitos on human volunteers.

However, the scientists concluded that the results indicated that a level of protection remained after the bands had been used for approximately one week.

It was considered that the effect of the bands would be insufficient to offer complete protection from mosquito attack, but would serve as a useful adjunct to the use of topically applied repellents.

There now follows a description of some particular embodiments of impregnated band usage and (re-)charging, by way of example only, together with some features not claimed but relayed for background perspective, with reference to the accompanying diagrammatic and schematic drawings, in which:

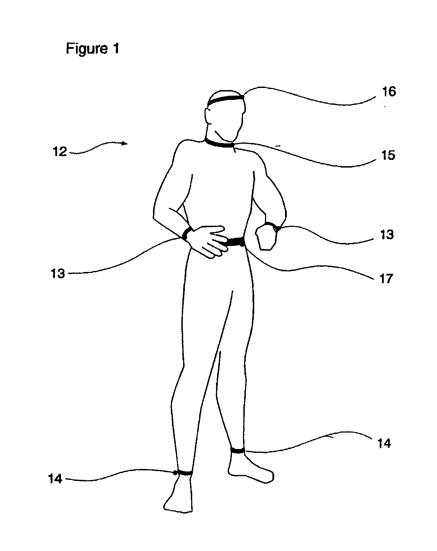

Figure 1 shows a subject figure, wearing treated garment bands at various body locations;
Figure 2A shows a laid-flat substrate strip, with profiled ends, as a formative (wrist) band;
Figure 2B shows a band formed by folding the strip of Figure 2A into a closed loop, ready for wear;
Various features (Figures 2C through 5D) are not claimed features of the invention.
Figure 2C shows preparatory surface deposition, or (re-)charging, of micro-capsules upon the strip of Figure 2A (not the subject of the claims);
Figures 3A through 3D show a bespoke immersion (re-)charge container and regulator cap, in progressive operational stages (not the subject of the claims);
Figures 4A through 4C show various views of an alternative dedicated band (re-)charge apparatus, of a container with integrated spray head and band stretch mount (not the subject of the claims);
Figure 4B shows a perspective view of the apparatus of Figure 4A, with a band fitted;
Figure 4C shows a cross-sectional view of the apparatus of Figure 4A, with a band fitted; and
Figures 5A through 5D shows another dedicated band (re-)charge apparatus of a container with bespoke spray head mount (not the subject of the claims);
Referring to the drawings, Figure 1 shows impregnated bands 13,14,15,16, 17 worn by a figure 12, as localised apparel.

Conveniently the bands 13 - 16 are fitted at various (exposed) body extremities, which are typically unclothed or uncovered, such as at the ends of limbs - specifically, arms-wrist bands 13; legs/feet-ankle bands 14; trunk-neck band 15; and head-forehead band 16.

A waist band 17 addresses the mid-trunk area - particularly with a bared mid-riff.

Aside from personal use by humans, in principle, subject to dosage considerations, and locations, such as around the neck, to inhibit licking, impregnated bands could be applied to animals.

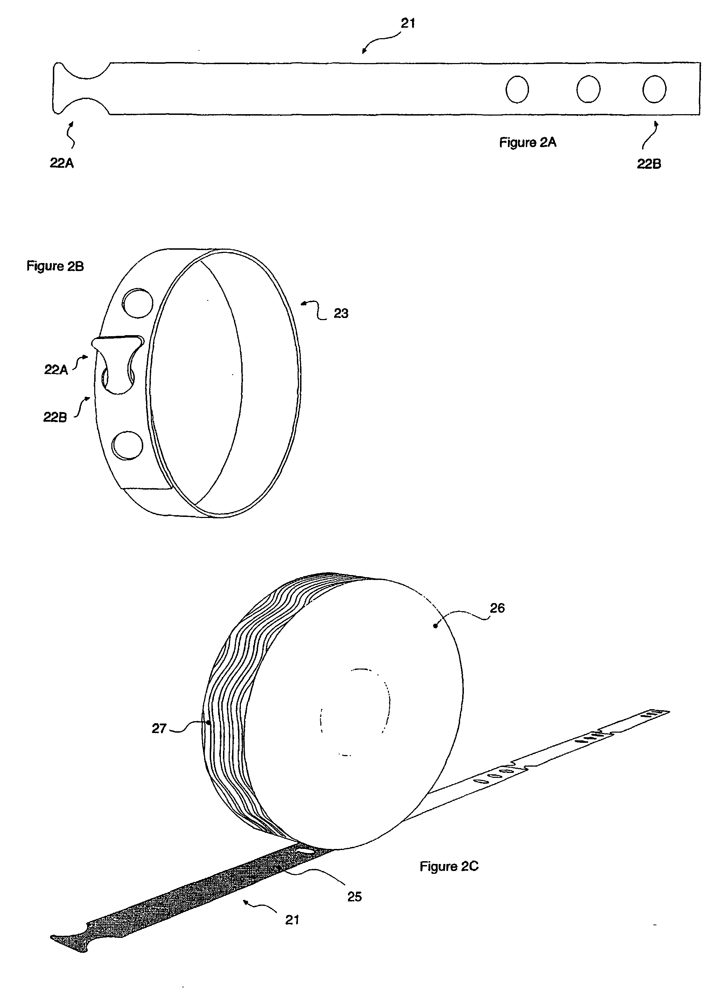

Figures 2A and 2B, show respectively a flat strip 21, with inter-fitting end profiles 22A, 22B, folded into a closed loop or band 23, with ends 22A, 22B mutually entrained.

Figure 2C not claimed features of the invention, shows micro-encapsulated surface layer 25 deposition upon the flat strip 21, through a bespoke intermediate (print) carrier roller 26.

The roller 26 has a recessed outer peripheral surface profile 27, to inhibit rupture of micro-capsules - and is fed from a reservoir (not shown).

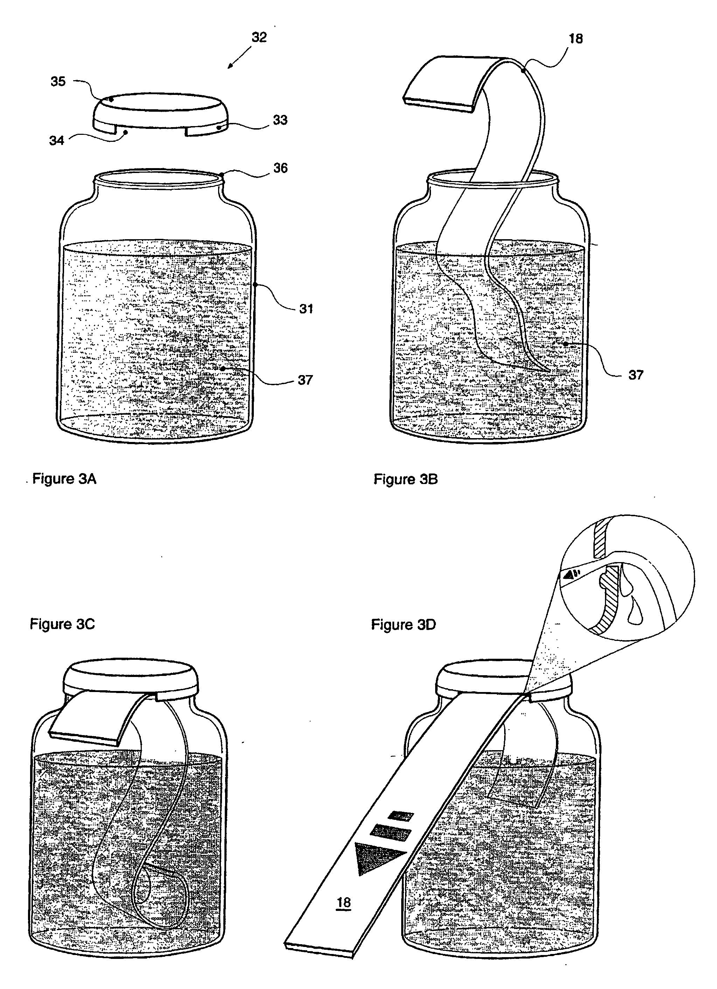

Figures 3A through 3D not claimed features of the invention, show a dedicated band (re-) charge apparatus of a container 31, for micro-encapsulated solution 37, with a neck 36 fitted with a bespoke cap or lid 32.

The lid 32 has a peripheral depending rim 33, with a localised cut-out or notch 34 of shallow depth, to interact with the container neck 36, and a closure 35 panel to cover the otherwise open neck mouth.

Upon fitment of the lid 32 to the container 31, the gap 34 is preserved to a marginal throat depth, just sufficient to accommodate the thickness of a band to be (re-)charged with micro-capsules, albeit with some frictional contact resistance or drag.

Operationally, a band 18 for (re-)charging is lowered into the open container 31, and immersed in the solution 37 of micro-encapsulated active ingredient in suspension - as depicted in Figure 3B.

One (outer) end of the band 18 is held out of the container to facilitate removal.

The lid 32 is then fitted to the open neck 36, with the protruding band 18 aligned with the gap 34 - as depicted in Figure 3C.

The band 18 is then gradually withdrawn from the container 31, through the gap 34 - as depicted in Figure 3D.

As the enlarged inset view in Figure 3D depicts, excess micro-encapsulated solution is 'squeezed' off the band as it passes through the gap 34 - preventing dripping and waste of the solution.

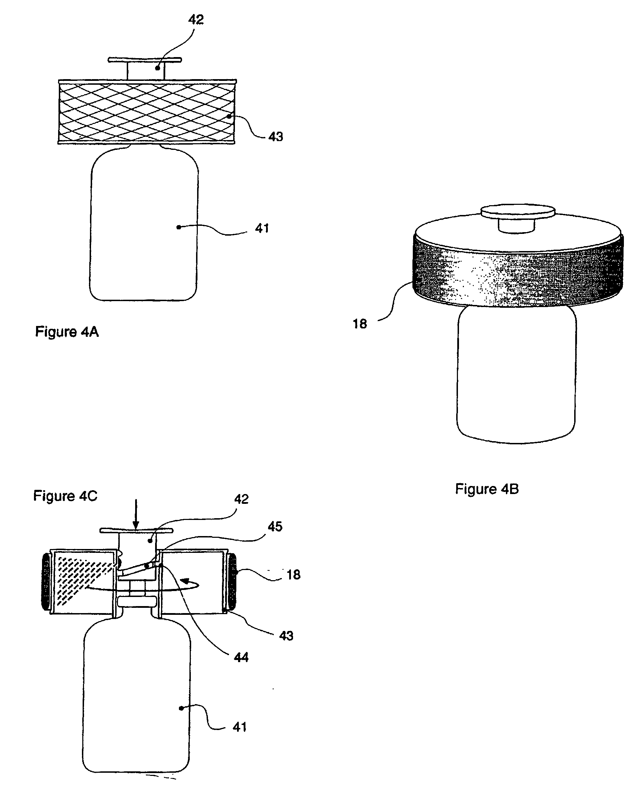

Figures 4A through 4C not claimed features of the invention show alternative dedicated band (re-)charge apparatus, with a container 41 surmounted by a pump-action, spray head nozzle 42, and rotary band mount 43.

A fabric band 18 for (re-)charge is stretched over the band mount 43.

The band mount 43 is effectively a permeable lattice, or gauze frame, through which atomised micro-encapsulates solution spray can pass to reach the fabric band.

The band mount 43 has a protrusion 44, which fits into a spiral guide channel 45 in the spray head 42.

The spiral path of the channel 45 effectively rotates the entire band mount 43 as the spray head 42 is depressed - and triggers a spray discharge therefrom, internally of the band mount 43 and outwardly directed to the band 18 stretched inner surface.

The band 18 is thus moved progressively around the spray nozzle 42 during spraying.

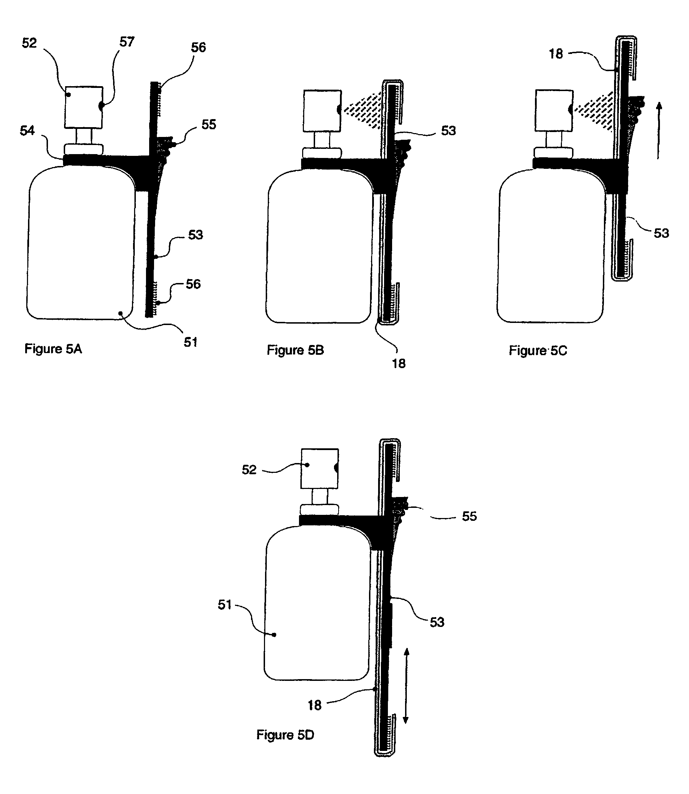

Figures 5A through 5D not claimed features of the invention, show another variant band recharge apparatus, with a linear slidable band mount 53 mounted upon the neck 54 of a container 51, with a spray head 52.

A band 18 to be (re-) charged is stretched over the band mount 53 and attached by, mounting patches 56, such as Velcro (Trade Mark), at the opposite ends.

The band mount 53 may be moved relative to the spray head 52, temporarily to align successive adjoining band 18 portions with a spray nozzle 57 - thus allowing the entire band 18 to be re-charged.

A thumb grip 55 on the back of the band mount 53 facilitates manual sliding.

The length of the band mount 53 may. be adjusted, to allow recharging of different band lengths, or to adjust band 18 stretch.

### Component List

- 12: humanoid
- 13: wrist band
- 14: ankle band
- 15: neck band
- 16: head band
- 17: waist band
- 18: fabric band
- 21: strip
- 22A/B: profiled ends
- 23: loop/band
- 25: surface layer
- 26: carrier roller
- 27: recessed surface profile
- 31: container
- 32: cap/lid
- 33: cap rim
- 34: notch
- 35: closure
- 36: container neck
- 37: micro-encapsulated solution
- 41: container
- 42: spray head
- 43: band mount
- 44: protrusion
- 45: channel
- 51: container
- 52: spray head
- 53: band mount
- 54: neck
- 55: thumb grip
- 56: mount pad
- 57: spray nozzle

## Claims

1. Insect repellent apparel,
comprising a fabric substrate,
embodying a micro-encapsulated formulation,
of insect repellent,
comprising N, N-diethyl-m-toluamide (DEET),
in combination with Citronella,
providing an olfactory indication
of repellent release,
by micro-capsule rupture,
upon fabric disturbance,
through wear and wearer contact.

2. Apparel, as claimed in Claim 1,
including a micro-encapsulated formulation of DEET and Citronella, in the relative proportions of 9:1.

3. Apparel, as claimed in either of the preceding claims,
including micro-encapsulated aromatherapy oil.

4. Apparel, as claimed in any of the preceding claims,
configured as a closed band or loop,
to facilitate wearing about a limb, digit or neck, of a person.

5. Apparel, as claimed in any of the preceding claims,
wherein the fabric substrate incorporates
inter-filamentary pores,
to accommodate, and temporarily entrain, micro-capsules.

6. Apparel, as claimed in any of the preceding claims,
including a fabric substrate of a coherent interwoven mesh or grid of intersecting filaments,
with an intervening array of pores,
to accommodate, and temporarily entrain, micro-capsules.

7. Apparel, as claimed in any of the preceding claims,
including a fabric substrate embodying a random, multi-layered, enmeshed filamentary fibre matrix,
with interstitial voids to accommodate micro-capsules.

8. Apparel, as claimed in any of the preceding claims,
wherein the fabric substrate is elasticated,
to facilitate the displacement, rupture or discharge of micro-capsules, upon fabric stretch and recovery,
and attendant relative displacement of fabric filaments,
and distension and shrinkage of inter-filamentary pores.

9. Apparel, as claimed in any of the preceding claims,
including a fabric substrate of non-woven fabric,
of laid fibre mesh pulp, such as paper or card.

10. Apparel, as claimed in any of the preceding claims,
including a substrate configured as inter-nesting filamentary form, such as woven and/or knitted.

11. Apparel, as claimed in any of the preceding claims,
including a substrate configured as random laid fibre mesh pulp, such as paper or card.

12. Apparel, as claimed in any of the preceding claims,
including a woven substrate,
configured as regular array of inter-filamentary pores in weave,
for entrainment of micro-capsules.

13. Apparel, as claimed in any of the preceding claims,
including a woven substrate construction,
configured to facilitate fabric stretch and recovery - towards substrate disturbance for rupture of micro-capsules,
and attendant contents release.

14. Apparel, as claimed in any of the preceding claims,
including a elasticated fabric substrate,
embodying elasticated yarn
and complementary weave pattern,
to restore shape after stretching.

15. Apparel, as claimed in any of the preceding claims,
including a non-woven, flexible or resiliently deformable substrate.

16. Apparel, as claimed in any of the preceding claims,
including a pressed fibre matting substrate,
configured to carry micro-capsules, ruptured by fabric flexing.

17. Apparel, as claimed in any of the preceding claims,
including a porous sponge substrate,
configured to carry micro-capsules, ruptured by fabric flexing.

18. Apparel, as claimed in any of the preceding claims,
including a fabric substrate configured as wear band.

19. Apparel, as claimed in any of the preceding claims,
configured, such as in a wear band, for wearer contact friction,
created by natural body movement,
sufficient to rupture [some] micro-capsules
and so progressively release their contents.

20. Apparel, as claimed in any of the preceding claims,
configured, such as in a wear band, for body contact
whereby body warmth helps condition active ingredient,
ready for evaporation upon release.

21. Apparel, as claimed in any of the preceding claims,
configured for promotion of release of micro-encapsulated active ingredient, by rubbing or stretching and 'snap-releasing' fabric against skin,
to rupture more micro-capsules,
with attendant release of active ingredient.

22. Apparel, as claimed in any of the preceding claims,
including a material with relatively greater surface area per unit length,
such as woven elasticated material,
for greater capacity for micro-capsules.

23. Apparel, as claimed in any of the preceding claims,
including a impregnated pulped fibre, such as paper, bands.

24. Apparel, as claimed in any of the preceding claims,
including a substrate surface coating,
to supplement impregnation, with micro-capsules.

25. Apparel, as claimed in any of the preceding claims,
including a multilayer, or laminated, 're-inforced' paper,
comprising plastic layer sandwiched between two paper layers, for increased inherent strength and durability.

26. Apparel, as claimed in any of the preceding claims,
including a formulation with olfactory (repellent) indicator,
to indicate band charge state, or depletion.

27. Apparel, as claimed in any of the preceding claims,
including a a flat strip,
with inter-fitting end profiles,
enabling folding into a closed loop or band,
with ends mutually entrained.

## Patentansprüche

1. Insektenabweisendes Bekleidungsstück,
bestehend aus einem Trägergewebe,
mit einem mikrogekapselten Präparat
eines insektenabweisenden Mittels,
bestehend aus N,N-Diethyl-m-Toluamid (DEET),
in Kombination mit Citronella,
mit geruchlicher Anzeige
der Abgabe des Repellent,
durch Platzen von Mikrokapseln,
bei Störung des Gewebes,
verursacht durch das Tragen und Kontakt mit dem Träger/der Trägerin.

2. Bekleidungsstück nach Anspruch 1,
einschließlich eines mikrogekapselten Präparats aus DEET und Citronella, im Verhältnis 9:1.

3. Bekleidungsstück nach einem der obigen Ansprüche,
einschließlich mikrogekapseltem Aromatherapie-Öl.

4. Bekleidungsstück nach einem der obigen Ansprüche,
konfiguriert als geschlossenes Band oder Schleife,
um das Tragen um Gliedmaßen, Finger, Zehen oder Hals einer Person zur erleichtern.

5. Bekleidungsstück nach einem der obigen Ansprüche,
wobei das Trägergewebe zwischen den Filamenten Poren aufweist,
die der Aufnahme und dem vorübergehenden Einschluss von Mikrokapseln dienen.

6. Bekleidungsstück nach einem der obigen Ansprüche,
einschließlich eines Trägergewebes
aus einem kohärenten, miteinander verwobenen Raster oder Gitter aus sich kreuzenden Filamenten, mit einem dazwischenliegenden Bereich von Poren,
die der Aufnahme und dem vorübergehenden Einschluss von Mikrokapseln dienen.

7. Bekleidungsstück nach einem der obigen Ansprüche,
einschließlich eines Trägergewebes mit
einer willkürlich angeordneten, mehrschichtigen, vernetzten Filament-Fasermatrix,
mit Zwischenräumen zur Aufnahme von Mikrokapseln.

8. Bekleidungsstück nach einem der obigen Ansprüche,
wobei das Trägergewebe elastisch ist,
zur Erleichterung von Verschiebung, Platzen oder Entleerung von Mikrokapseln,
bei Dehnung und Rückverformung des Gewebes,
und damit verbundener relativer Verschiebung der Gewebefäden,
sowie Dehnung und Schrumpfung der Poren zwischen den Filamenten.

9. Bekleidungsstück nach einem der obigen Ansprüche,
einschließlich eines Trägergefüges aus nicht gewebtem Material
aus gelegtem Fasernetz-Zellstoff, wie zum Beispiel Papier oder Karton.

10. Bekleidungsstück nach einem der obigen Ansprüche,
einschließlich eines verschachtelten fadenförmigen Trägermaterials,
zum Beispiel gewebtes und/oder gewirktes Material.

11. Bekleidungsstück nach einem der obigen Ansprüche,
einschließlich eines als willkürlich gelegter Fasernetz-Zellstoff konfigurierten Trägermaterials,
wie zum Beispiel Papier oder Karton.

12. Bekleidungsstück nach einem der obigen Ansprüche,
einschließlich eines gewebten Trägermaterials,
konfiguriert als regelmäßige Gruppierung von Poren zwischen den Filamenten im Gewebe, zum Einschluss von Mikrokapseln.

13. Bekleidungsstück nach einem der obigen Ansprüche,
einschließlich einer gewebten Trägermaterialstruktur,
konfiguriert zur Erleichterung von Dehnung und Rückverformung - bis hin zur Störung des Trägermaterials und dem Platzen von Mikrokapseln,
und damit verbundener Freigabe des Inhalts.

14. Bekleidungsstück nach einem der obigen Ansprüche,
einschließlich eines elastischen Trägergewebes,
mit elastischem Garn
und komplementärem Webmuster,
zur Wiederherstellung der Form nach der Dehnung.

15. Bekleidungsstück nach einem der obigen Ansprüche,
einschließlich eines nicht gewebten, flexiblen oder elastisch verformbaren Trägermaterials.

16. Bekleidungsstück nach einem der obigen Ansprüche,
einschließlich eines Trägermaterials aus gepresster Fasermatte,
konfiguriert zur Aufnahme von Mikrokapseln, die beim Dehnen des Materials platzen.

17. Bekleidungsstück nach einem der obigen Ansprüche,
einschließlich eines porösen schwammigen Trägermaterials,
konfiguriert zur Aufnahme von Mikrokapseln, die beim Dehnen des Materials platzen.

18. Bekleidungsstück nach einem der obigen Ansprüche,
einschließlich eines Trägermaterials, das als zum Tragen vorgesehenes Band konfiguriert ist.

19. Bekleidungsstück nach einem der obigen Ansprüche,
das zur Erzeugung von Reibung bei Kontakt mit dem Träger/der Trägerin konfiguriert ist, wie zum Beispiel als zum Tragen vorgesehenes Band,
wobei die Reibung durch die natürliche Körperbewegung entsteht
und ausreicht, um [einige] Mikrokapseln zum Platzen zu bringen
und so allmählich ihren Inhalt freizugeben.

20. Bekleidungsstück nach einem der obigen Ansprüche,
konfiguriert zur Erzeugung von Körperkontakt, zum Beispiel als zum Tragen vorgesehenes Band,
wobei die Körperwärme zur Konditionierung des Wirkstoffs beiträgt,
sodass er bei der Freigabe verdunstet.

21. Bekleidungsstück nach einem der obigen Ansprüche,
konfiguriert zur Förderung der Freigabe von mikrogekapseltem Wirkstoff,
durch Reiben oder Dehnen und "Zurückschnappen" des Gewebes auf der Haut,
was zum Platzen weiterer Mikrokapseln führt,
und damit verbundener Freigabe von Wirkstoff.

22. Bekleidungsstück nach einem der obigen Ansprüche,
einschließlich eines Materials mit relativ großer Oberfläche pro Längeneinheit,
wie zum Beispiel gewebtes elastisches Material,
um die Aufnahmefähigkeit von Mikrokapseln zu vergrößern.

23. Bekleidungsstück nach einem der obigen Ansprüche,
einschließlich eines imprägnierten zerfasten Faserstoffs, wie zum Beispiel Papier, Bänder.

24. Bekleidungsstück nach einem der obigen Ansprüche,
einschließlich einer Oberflächenbeschichtung des Trägermaterial,
zur Ergänzung der Imprägnierung, mit Mikrokapseln.

25. Bekleidungsstück nach einem der obigen Ansprüche,
einschließlich mehrlagigem, oder laminiertem, "verstärktem" Papier, bestehend aus einer Plastikschicht zwischen zwei Papierlagen,
für erhöhte inhärente Festigkeit und Haltbarkeit.

26. Bekleidungsstück nach einem der obigen Ansprüche,
einschließlich eines Präparats mit geruchlicher Anzeige (des Repellent), zur Anzeige des Bandladezustands, bzw. der Erschöpfung.

27. Bekleidungsstück nach einem der obigen Ansprüche,
einschließlich eines flachen Streifens,
mit ineinander passenden Endprofilen,
zur Bildung einer Schleife oder eines Bands,
mit miteinander verbundenen Enden.

## Revendications

1. Vêtement insectifuge, comprenant un substrat en tissu, comportant une formulation microencapsulée de produit insectifuge comprenant du N,N-diéthyl-m-toluamide (DEET), en association avec de la citronelle, procurant une indication olfactive de la libération du produit insectifuge, par rupture des microcapsules lorsque le tissu est dérangé sous l'effet du port et du contact du porteur.

2. Vêtement selon la revendication 1, contenant une formulation microencapsulée de DEET et de citronelle, dans les proportions relatives de 9:1.

3. Vêtement selon l'une quelconque des revendications précédentes, contenant une huile d'aromathérapie microencapsulée.

4. Vêtement selon l'une quelconque des revendications précédentes, configuré en bande fermée ou en boucle, pour faciliter le port autour d'un membre, d'un doigt ou du cou d'une personne.

5. Vêtement selon l'une quelconque des revendications précédentes, dans lequel le substrat en tissu contient des pores entre les filaments servant à loger, et à entraîner temporairement, les microcapsules.

6. Vêtement selon l'une quelconque des revendications précédentes, contenant un substrat en tissu d'une maille ou grille entrelacée cohérente faite de filaments entrecroisés, avec un réseau intercalé de pores, servant à loger, et à entraîner temporairement, les microcapsules.

7. Vêtement selon l'une quelconque des revendications précédentes, contenant un substrat en tissu comportant une matrice fibreuse de filaments entrelacés, multicouche, aléatoire, avec des vides interstitiels servant à loger les microcapsules.

8. Vêtement selon l'une quelconque des revendications précédentes, dans lequel le substrat en tissu est élastifié, pour faciliter le déplacement, la rupture ou la décharge de microcapsules lorsque le tissu est étiré et récupère sa forme, et que les filaments du tissu se déplacent de ce fait et que les pores entre les filaments se relâchent et se rétrécissent.

9. Vêtement selon l'une quelconque des revendications précédentes, contenant un substrat en tissu fait de tissu non tissé, de pâte de fibres en maille étalée, telle que papier ou carton.

10. Vêtement selon l'une quelconque des revendications précédentes, contenant un substrat configuré sous une forme de filaments entrelacés tels que tissés et/ou tricotés.

11. Vêtement selon l'une quelconque des revendications précédentes, contenant un substrat configuré en pâte de fibres en maille étalée de façon aléatoire, telle que papier ou carton.

12. Vêtement selon l'une quelconque des revendications précédentes, contenant un substrat tissé, configuré comme un réseau régulier de pores entre les filaments dans le tissage, pour entraîner les microcapsules.

13. Vêtement selon l'une quelconque des revendications précédentes, contenant une construction de substrat tissé, configurée de manière à faciliter l'étirement et la récupération du tissu vis-à-vis du dérangement du substrat pour la rupture de microcapsules et en conséquence la libération de leur contenu.

14. Vêtement selon l'une quelconque des revendications précédentes, contenant un substrat en tissu élastifié, comportant un fil élastifié et un motif de tissage complémentaire, pour restaurer la forme après l'étirement.

15. Vêtement selon l'une quelconque des revendications précédentes, contenant un substrat non tissé, souple ou déformable par élasticité.

16. Vêtement selon l'une quelconque des revendications précédentes, contenant un substrat en matelas de fibres pressé, configuré pour porter des microcapsules, rompues par la flexion du tissu.

17. Vêtement selon l'une quelconque des revendications précédentes, contenant un substrat en éponge poreuse, configuré pour porter des microcapsules, rompues par la flexion du tissu.

18. Vêtement selon l'une quelconque des revendications précédentes, contenant un substrat en tissu configuré comme une bande d'usage.

19. Vêtement selon l'une quelconque des revendications précédentes, configuré, comme dans une bande d'usage, pour le frottement de contact avec le porteur créé par le mouvement naturel du corps, suffisant pour rompre [certaines] microcapsules et libérer ainsi progressivement leur contenu.

20. Vêtement selon l'une quelconque des revendications précédentes, configuré, comme dans une bande d'usage, pour le contact avec le corps, dans lequel la chaleur du corps aide à conditionner la substance active pour qu'elle soit prête à l'évaporation dès sa libération.

21. Vêtement selon l'une quelconque des revendications précédentes, configuré pour promouvoir la libération d'une substance active microencapsulée, par frottement ou étirement et "brusque remise en place après étirement" du tissu contre la peau, pour rompre plus de microcapsules, avec en conséquence libération de la substance active.

22. Vêtement selon l'une quelconque des revendications précédentes, contenant un matériau ayant une surface spécifique relativement plus grande par unité de longueur, tel qu'un matériau élastifié tissé, pour avoir une plus grande capacité pour les microcapsules.

23. Vêtement selon l'une quelconque des revendications précédentes, contenant des bandes de fibres triturées imprégnées, comme du papier.

24. Vêtement selon l'une quelconque des revendications précédentes, comprenant le revêtement d'une surface du substrat, pour compléter l'imprégnation, avec des microcapsules.

25. Vêtement selon l'une quelconque des revendications précédentes, contenant un papier multicouche ou stratifié "renforcé" comprenant une couche de matière plastique prise en sandwich entre deux couches de papier pour augmenter la résistance mécanique inhérente et la durabilité.

26. Vêtement selon l'une quelconque des revendications précédentes, contenant une formulation avec un indicateur olfactif (insectifuge), pour indiquer l'état de charge, ou l'appauvrissement, de la bande.

27. Vêtement selon l'une quelconque des revendications précédentes, contenant un ruban plat avec des profils d'extrémité s'adaptant mutuellement, permettant le repliement en boucle ou en bande fermée avec les extrémités entraînées mutuellement.
